# EUROPEAN PATENT SPECIFICATION

(11) **EP 2 903 064 B1**
(45) Date of publication and mention of the grant of the patent: **10.05.2017**
(21) Application number: 13842498.1
(22) Date of filing: 27.09.2013
(51) Int. Cl.: H01M 4/66, C09J 9/02, C09J 11/04, C09J 123/22, C09J 201/00, H01B 1/24, H01G 11/66, H01M 4/13

(54) **ELECTROCONDUCTIVE ADHESIVE COMPOSITION FOR ELECTROCHEMICAL DEVICE ELECTRODE, CURRENT COLLECTOR WITH ADHESIVE LAYER, AND ELECTRODE FOR ELECTROCHEMICAL DEVICE**
ELEKTROLEITFÄHIGE KLEBSTOFFZUSAMMENSETZUNG FÜR EINE ELEKTRODE FÜR EINE ELEKTROCHEMISCHE VORRICHTUNG, STROMKOLLEKTOR MIT HAFTSCHICHT UND ELEKTRODE FÜR EINE ELEKTROCHEMISCHE VORRICHTUNG
COMPOSITION ADHÉSIVE ÉLECTROCONDUCTRICE POUR ÉLECTRODE DE DISPOSITIF ÉLECTROCHIMIQUE, COLLECTEUR DE CURRANT COMPRENANT UNE COUCHE ADHÉSIVE, ET ÉLECTRODE POUR DISPOSITIF ÉLECTROCHIMIQUE

(30) Priority: 28.09.2012 JP 2012217137
(43) Date of publication of application: 05.08.2015
(73) Proprietor: Zeon Corporation, Tokyo 100-8246 (JP)
(72) Inventor: YOSHIDA Naoki, Tokyo 100-8246 (JP)
(74) Representative: Vossius & Partner Patentanwälte Rechtsanwälte mbB
(86) International application number: PCT/JP2013/076236
(87) International publication number: WO 2014/051043

(56) References cited:
- JP-A- 2006 210 883
- JP-A- 2006 351 316
- JP-A- 2010 116 475
- US-A- 5 464 707
- US-A1- 2007 247 788
- US-A1- 2009 325 069

## Description

### {Technical Field}

The present invention relates to an electroconductive adhesive composition for an electrochemical device electrode, which can form a uniform electroconductive adhesive layer having excellent adhesion; a current collector with an adhesive layer and an electrode for an electrochemical device, which can be obtained by using the electroconductive adhesive composition for an electrochemical device electrode.

### {Background Art}

An electrochemical device, in particular a lithium ion battery, which is compact and lightweight, has high energy density, and is further capable of repeatedly charging and discharging, has rapidly expanded the demand by utilizing the characteristics. Furthermore, the electrochemical device represented by a lithium ion battery has been expected to be used for from small size applications such as mobile phones or laptop personal computers to large size applications such as for in-vehicle, as it has large energy density and output density. Therefore, for these electrochemical devices, with the increase or development in the applications, further improvement of the lower resistance, the higher capacity, the high voltage resistance, the mechanical characteristics, the cycle lifetime, and the like has been required.

The electrochemical device can increase the operating voltage by using an organic-based electrolytic solution, and thus can increase the energy density, however on the other hand, since the viscosity of the electrolytic solution is high, there is a problem that the internal resistance is large.

In order to reduce the internal resistance, it is proposed to provide an electroconductive adhesive layer between an electrode active material layer and a current collector (Patent Literature 1). In Patent Literature 1, an electroconductive adhesive layer is formed by using an electroconductive adhesive composition for an electrochemical device electrode, which contains carbon fine particles as an electroconductive material, and a polysaccharide polymer cross-linked with a cross-linking agent as a binding agent.

### {Citation List}

### {Patent Literature}

Patent Literature 1: Japanese Patent No. 4909443

### {Summary of Invention}

### {Technical Problem}

However, in Patent Literature 1, because of a high gel content in the adhesive composition, there is a possibility that coating unevenness is generated when an adhesive composition is applied on a current collector in order to form an electroconductive adhesive layer. As a result, there is a possibility that the adhesion to a current collector of the electroconductive adhesive layer to be formed is deteriorated, and further cycle characteristics (lifetime) are inferior since a current flows locally in the electrochemical device to be obtained. Further, in Patent Literature 1, there is a possibility that uncoated parts are generated when high-speed coating of an adhesive composition is performed since the wettability of the adhesive composition to a current collector is poor.

Therefore, the present invention is to provide an electroconductive adhesive composition for an electrochemical device electrode, which can uniformly be applied on a current collector, and has favorable cycle characteristics of the electrochemical device to be obtained; a current collector with an adhesive layer; and an electrode for an electrochemical device.

### {Solution to Problem}

### As a result of extensive studies, the present inventor found that the above object can be achieved by using a specific water-soluble polymer, leading completion of the present invention.

That is, according to the present invention, the following is provided:
(1) An electroconductive adhesive composition for an electrochemical device electrode, containing an electroconductive carbon, a water-soluble polymer, a particulate binding agent, and a dispersion medium, wherein the water-soluble polymer is an isobutylene-maleic anhydride copolymer containing a structural unit (a) represented by the following general formula (I) 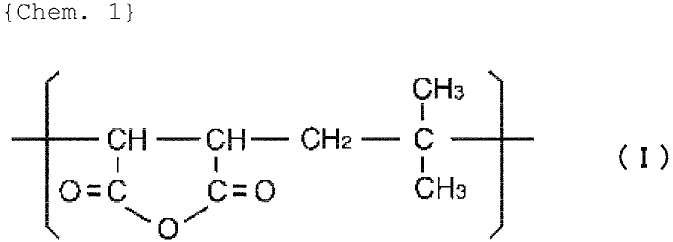 , and is partially hydrolyzed;
(2) The electroconductive adhesive composition for an electrochemical device electrode according to (1), wherein a molecular weight (Mw) of the water-soluble polymer is 30,000 to 300,000;
(3) The electroconductive adhesive composition for an electrochemical device electrode according to (1) or (2), wherein the water-soluble polymer contains a structural unit (b) represented by the following general formula (II) 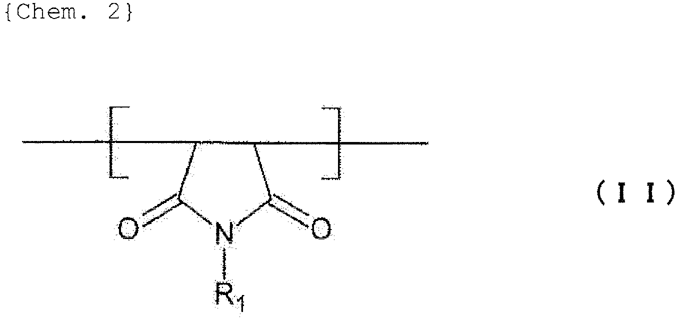 wherein R₁ is at least one functional group selected from the group consisting of a hydrogen, an alkyl group having 1 to 6 carbon atoms, a cycloalkyl group having 3 to 12 carbon atoms, a phenyl group, and a hydroxyphenyl group;
   or/and a structural unit (c) represented by the following general formula (III) 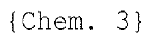 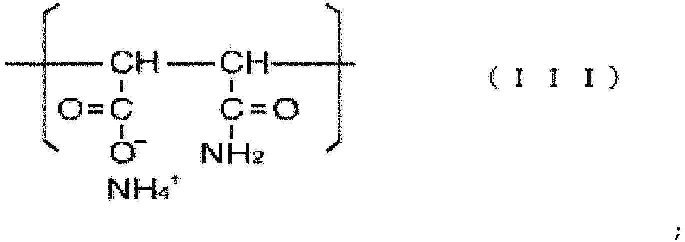
(4) The electroconductive adhesive composition for an electrochemical device electrode according to any one of (1) to (3), wherein a content ratio of the structural unit (a) to the structural unit (b) and the structural unit (c) is, the structural unit (a) / the structural unit (b) and the structural unit (c) = 25/75 to 75/25 in a molar ratio, in the water-soluble polymer;
(5) The electroconductive adhesive composition for an electrochemical device electrode according to any one of (1) to (4), wherein a content ratio of the electroconductive carbon is 8 to 38% by mass, a content ratio of the water-soluble polymer is 2 to 4% by mass, a content ratio of the particulate binding agent is 2 to 20% by mass, and a content ratio of the dispersion medium is 60 to 90% by mass;
(6) The electroconductive adhesive composition for an electrochemical device electrode according to any one of (1) to (5), wherein a pH of the electroconductive adhesive composition for an electrochemical device electrode is 6 to 10;
(7) A current collector with an adhesive layer, containing: an electroconductive adhesive layer obtained by applying the electroconductive adhesive composition for an electrochemical device electrode according to any one of (1) to (6) onto a current collector and drying the electroconductive adhesive composition for an electrochemical device electrode;
(8) The current collector with an adhesive layer according to (7), wherein a thickness of the electroconductive adhesive layer is 0.5 to 5 µm; and
(9) An electrode for an electrochemical device, containing: an electrode active material layer containing an electrode active material, on the electroconductive adhesive layer of the current collector with an adhesive layer according to (7) or (8).

### {Advantageous Effects of Invention}

According to the present invention, an electroconductive adhesive composition for an electrochemical device electrode, which can uniformly be applied on a current collector, and has favorable cycle characteristics of the electrochemical device to be obtained; a current collector with an adhesive layer; and an electrode for an electrochemical device are provided.

### {Description of Embodiments}

Hereinafter, the present invention will further be specifically explained including the embodiments. An electroconductive adhesive composition for an electrochemical device electrode of the present invention is characterized by containing an electroconductive carbon, a water-soluble polymer, a particulate binding agent, and a dispersion medium, in which the water-soluble polymer is an isobutylene-maleic anhydride copolymer containing a structural unit (a) represented by the following general formula (I), 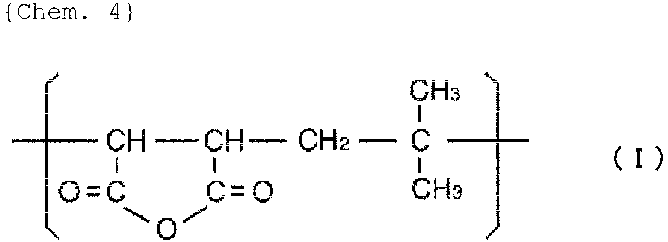 , and is partially hydrolyzed. Hereinafter, each component will be explained.

### (Electroconductive Carbon)

While the form of the electroconductive carbon is not particularly limited, the electroconductive carbon used in the electroconductive adhesive composition for an electrochemical device electrode (hereinafter, it may be simply referred to as "adhesive composition") according to the present invention is generally a carbon particle. The carbon particle is a particle consisting of carbon alone, or a particle substantially consisting of carbon alone. The specific examples of the particle include graphite having high electroconductivity according to the presence of delccalized π electrons (specifically, natural graphite, synthesized graphite, or the like), carbon black that is a spherical aggregate formed with a turbostratic structure having several layers of carbon fine crystals of graphite together (specifically, acetylene black, ketjen black, other furnace black, channel black, thermal lamp black, or the like), carbon fiber, and carbon wisker. Among these, graphite or carbon black is particularly preferable from the viewpoint that the carbon particle can be filled in high density and can reduce the electron transfer resistance of an electroconductive adhesive layer, and the internal resistance of a lithium ion battery can be further reduced. These electroconductive carbons may be used alone, or may be used in combination of two kinds thereof.

The electric resistivity of the electroconductive carbon is preferably 0.0001 to 1 Ω·cm, more preferably 0.0005 to 0.5 Ω·cm, and particularly preferably 0.001 to 0.1 Ω·cm. When the electric resistivity of the electroconductive carbon is in this range, the electron transfer resistance of an electroconductive adhesive layer is further reduced, and the internal resistance of a lithium ion battery can further be reduced. Here, as the electric resistivity, the resistance value is measured using a powder resistance measuring system (MCP-PD51 type, manufactured by Dia Instruments Co., Ltd.) while applying a pressure to a carbon particle, and the electric resistivity p (Ω·cm) = R × (S/d) is calculated from the resistance value R (Ω) converged to pressure, and the area S (cm²) and thickness d (cm) of the compressed carbon particle layer.

The volume average particle diameter of the electroconductive carbon is preferably 0.01 to 20 µm, more preferably 0.02 to 15 µm, and particularly preferably 0.03 to 10 µm. When the volume average particle diameter of the electroconductive carbon is in this range, electroconductive carbon in an electroconductive adhesive layer is filled in high density, therefore the electron transfer resistance is further reduced, and the internal resistance of a lithium ion battery is further reduced. Here, the volume average particle diameter is a volume average particle diameter measured by a laser diffraction type particle size distribution measuring apparatus (SALD-3100, manufactured by Shimadzu Corporation), and calculated.

### (Water-Soluble Polymer)

A water-soluble polymer means a polymer in which an insoluble content is less than 0.5% by mass when 0.5 g of the polymer is dissolved in 100 g of water at 25°C.

### (Isobutylene-maleic anhydride copolymer)

A water-soluble polymer used for the electroconductive adhesive composition for an electrochemical device electrode of the present invention is an isobutylene-maleic anhydride copolymer containing a structural unit (a) represented by the following formula (I) 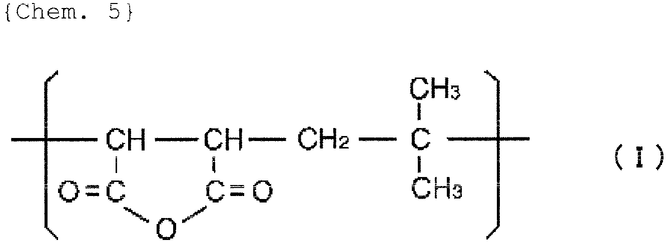 • Further, part of the structural unit (a) contained in the water-soluble polymer is hydrolyzed.

### (Maleic acid imide-modified unit)

Further, the isobutylene-maleic anhydride copolymer described above may be partially imidized. That is, a water-soluble polymer used for the electroconductive adhesive composition for an electrochemical device electrode of the present invention may contain a structural unit (b) (maleic acid imide-modified unit) represented by the following general formula (II), 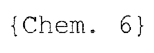 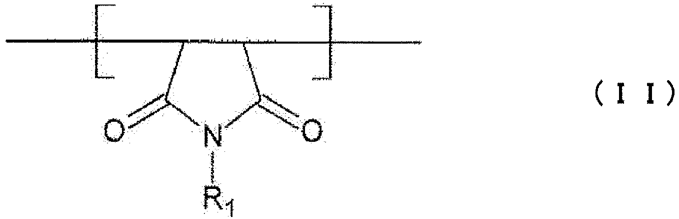 (in general formula (II), R₁ is at least one functional group selected from the group consisting of a hydrogen, an alkyl group having 1 to 6 carbon atoms, a cycloalkyl group having 3 to 12 carbon atoms, a phenyl group, and a hydroxyphenyl group).

Further, the copolymer may contain a structural unit (d) represented by the following general formula (IV) 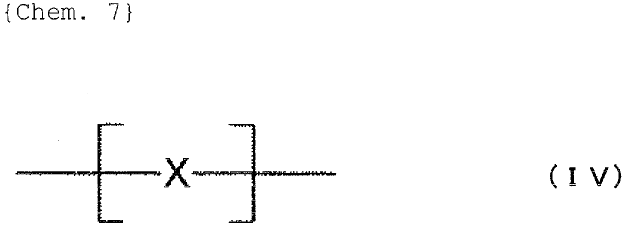 (in general formula (IV), X represents a maleic acid residue, may partially be neutralized by ions other than the hydrogen ion, may partially be dehydrated, or further may partially be esterified).

### (Structural unit (b))

A structural unit (b) is a structural unit having a maleimide skeleton represented by the above general formula (II). The structural unit is, for example, derived from the maleimides represented by the following general formula (II-1), or obtained by imidizing the structural unit (d) described below. 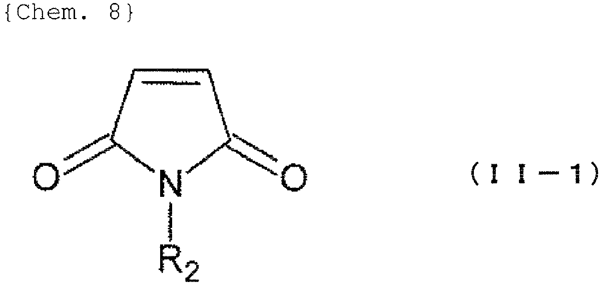 (Here, R₂ is at least one functional group selected from the group consisting of a hydrogen, an alkyl group having 1 to 6 carbon atoms, a cycloalkyl group having 3 to 12 carbon atoms, a phenyl group, and a hydroxyphenyl group.)

Specific examples of the compound leading to the structural unit (b) represented by general formula (II-1) include maleimide, N-methylmaleimide, N-ethylmaleimide, N-propyl maleimide, N-butyl maleimide, N-pentyl maleimide, N-hexyl maleimide; N-phenyl maleimide, N-(2-methylphenyl)maleimide, N-(3-methylphenyl)maleimide, N-(4-methylphenyl)maleimide, N-(2-ethylphenyl)maleimide, N-(3-ethylphenyl)maleimide, N-(2-N-propyl phenyl)maleimide, N-(2-i-p-ropyl phenyl)maleimide, N-(2-N-butyl phenyl)maleimide, N-(2,6-dimethylphenyl)maleimide, N-(2,4,6-trimethylphenyl)maleimide, N-(2,6-diethylphenyl)maleimide, N-(2,4,6-triethylphenyl)maleimide, N-(2-methoxy phenyl)maleimide, N-(2, v-dimethoxy phenyl)maleimide, N-(2-bromo phenyl)maleimide, N-(2-chloro phenyl)maleimide, N-(2,6-dibromo phenyl)maleimide; and N-(4-hydroxy phenyl)maleimide. Among these, from the viewpoint of the reactivity to non-electroconductive particles, maleimide is preferable. The maleimides that lead to the structural unit (b) described above can be used alone or in combination of two or more kinds thereof.

### (Structural unit (d))

A structural unit (d) is a structural unit having a maleic skeleton represented by the above general formula (IV). The structural unit (d) may partially be neutralized by ions other than the hydrogen ion, may partially be dehydrated, or further may partially be esterified. The structural unit is, for example, derived from the maleic acids represented by the following general formula (IV-1), or the maleic anhydrides represented by the following general formula (IV-2).

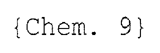

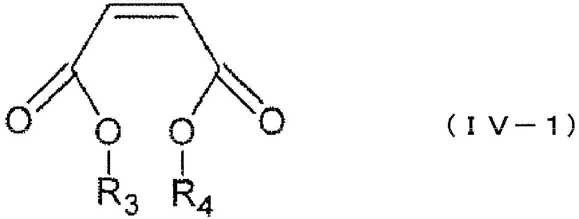

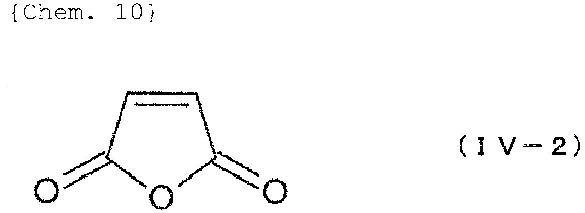

(Here, R₃ and R₄ may be the same as or different from each other, and may be a hydrogen or an alkyl group, or a salt neutralized by an alkali metal ion, an alkaline earth metal ion, an ammonium ion, an alkyl amine, or an alkanolamine).

Specific examples of the compound leading to the structural unit (d) represented by general formula (IV-1) include a maleic acid ester and/or a maleic acid salt.

Examples of the maleic acid ester include monomethyl maleate, dimethyl maleate, monoethyl maleate, dietyl maleate, monopropyl maleate, and dipropyl maleate.

Examples of the maleic acid salt include an alkali metal salt of maleic acid such as monolithium maleate, dilithium maleate, monosodium maleate, disodium maleate, monopotassium maleate, and dipotassium maleate; an alkaline earth metal salt of maleic acid such as calcium maleate, and magnesium maleate; an ammonium salt of maleic acid such as monoammonium maleate, and diammonium maleate; an alkylamine salt of maleic acid such as monomethylammonium maleate, bismonomethylammonium maleate, monodimethylammonium maleate, and bisdimethylammonium maleate; and an alkanolamine salt of maleic acid such as maleic acid-2-hydroxyethyl ammonium, maleic acid bis-2-hydroxyethyl ammonium, maleic acid di(2-hydroxyethyl)ammonium, and maleic acid bis di(2-hydroxyethyl)ammonium.

Specific examples of the compound leading to the structural unit (d) represented by general formula (IV-2) include a maleic anhydride.

The above-described maleic acids or maleic anhydrides that lead to the structural unit (d) can be used alone or in combination of two or more kinds thereof.

### (Maleic acid amine-modified unit)

Further, a water-soluble polymer used for the electroconductive adhesive composition for an electrochemical device electrode of the present invention may contain a structural unit (c) (maleic acid amine-modified unit) represented by the following formula (III).

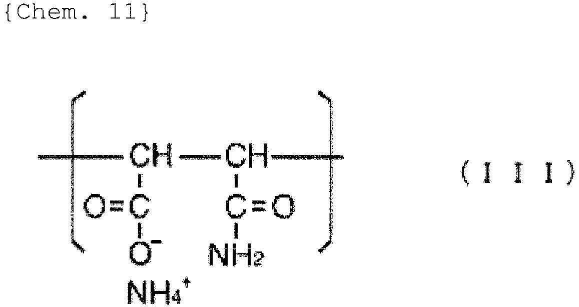

### (Composition)

A ratio of the structural unit (a) to the structural unit (b) and the structural unit (c) is, the structural unit (a) / the structural units (b) and (c) = 25/75 to 75/25 in a molar ratio, in the water-soluble polymer used for the present invention.

Further, a molecular weight of the water-soluble polymer used for the present invention is 30,000 or more from the viewpoint that a coating film having high adhesion to a current collector is obtained, and 300,000 or less, preferably 280,000 or less, and more preferably 250,000 or less, from the viewpoint that a coating material suitable for high-speed coating is obtained.

### (Particulate binding agent)

The particulate binding agent used for the electroconductive adhesive composition for an electrochemical device electrode of the present invention is not particularly limited as long as being a compound capable of binding the electroconductive carbons to each other. The suitable particulate binding agent is a dispersion type binding agent with a property of dispersing into a dispersion medium. Examples of the dispersion type binding agent include, for example, a polymer compound such as a fluorine-based polymer, a diene-based polymer, an acrylic polymer, polyimide, polyamide, and a polyurethane-based polymer.

The diene-based polymer is a copolymer obtained by the polymerization of a homopolymer of conjugated diene, or a monomer mixture containing a conjugated diene, or the hydrogenated product thereof. Specific examples of the diene-based polymer include a conjugated diene homopolymer such as polybutadiene, and polyisoprene; an aromatic vinyl-conjugated diene copolymer such as a styrene-butadiene copolymer (SBR) that may be carboxy modified; a cyanated vinyl-conjugated diene copolymer such as acrylonitrile-butadiene copolymer (NBR); a hydrogenated SBR; and a hydrogenated NBR.

The acrylic polymer is a homopolymer of acrylic ester, or methacrylic ester; or a copolymer with a monomer that can be copolymerized therewith. Examples of the copolymerizable monomer include unsaturated carboxylic acids such as acrylic acid, methacrylic acid, itaconic acid, and fumaric acid; carboxylic acid esters having two or more carbon-carbon double bonds, such as ethylene glycol dimethacrylate, diethylene glycol dimethacrylate, and trimethylolpropane triacrylate; a styrene-based monomer such as styrene, chlorostyrene, vinyl toluene, t-butylstyrene, vinylbenzoic acid, methylvinylbenzoate, vinylnaphthalene, chloromethylstyrene, hydroxymethylstyrene, α-methylstyrene, and divinylbenzene; an amide-based monomer such as acrylamide, N-methylolacrylamide, and acrylamide-2-methylpropane sulfonic acid; an α,β-unsaturated nitrile compound such as acrylonitrile, and methacrylonitrile; olefins such as ethylene, and propylene; a diene-based monomer such as butadiene, and isoprene; a halogen atom-containing monomer such as vinyl chloride, and vinylidene chloride; vinyl esters such as vinyl acetate, vinyl propionate, vinyl butyrate, and vinyl benzoate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; a heterocyclic ring-containing vinyl compound such as N-vinyl pyrrolidone, vinylpyridine, and vinylimidazole; and a hydroxyalkyl group-containing compound such as β-hydroxyethyl acrylate , and β-hydroxyethyl methacrylate.

Among these, an acrylic polymer, SBR, and NBR are preferably used, and an acrylic polymer, and SBR are more preferably used. Further, the content of the particulate binding agent in an electroconductive adhesive composition is 0.5 to 10% by mass, preferably 0.7 to 8% by mass, and more preferably 1 to 6% by mass. The ratio of the 1,3-butadiene monomer unit in 100 parts by mass of a binding agent in the case of using NBR is preferably 40 to 75 parts by mass, and more preferably 45 to 75 parts by mass. Further, the ratio of the acrylonitrile monomer unit in 100 parts by mass of a binding agent in the case of using NBR is preferably 20 to 60 parts by mass, and more preferably 20 to 45 parts by mass.

### (Production of particulate binding agent)

While the production method of the particulate binding agent is not particularly limited, as described above, the particulate binding agent can be obtained by emulsion polymerization of a monomer mixture containing a monomer that constitutes a polymer compound. As the method of the emulsion polymerization, the method is not particularly limited, and the conventionally known emulsion polymerization method may be employed.

Examples of the polymerization initiator to be used in the emulsion polymerization include, for example, an inorganic peroxide such as sodium persulfate, potassium persulfate, ammonium persulfate, potassium perphosphate, and hydrogen peroxide; an organic peroxide such as t-butylperoxide, cumene hydroperoxide, p-menthane hydroperoxide, di-t-butyl peroxide, t-butylcumyl peroxide, acetyl peroxide, isobutyryl peroxide, octanoyl peroxide, benzoyl peroxide, 3,5,5-trimethylhexanoyl peroxide, and t-butylperoxy isobutyrate; and an azo compound such as azobisisobutyronitrile, azobis-2,4-dimethylvaleronitrile, azobis cyclohexanecarbonitrile, and methyl azobisisolactate.

Among these, an inorganic peroxide can preferably be used. These polymerization initiators may be used alone or in combination of two or more kinds thereof, respectively. Further, a peroxide initiator may also be used as a redox-based polymerization initiator, in combination with a reducing agent such as sodium bisulfite.

The use amount of the polymerization initiator is preferably 0.05 to 5 parts by mass, and more preferably 0.1 to 2 parts by mass with respect to 100 parts by mass of the total amount of the monomer mixture to be used for the polymerization.

In order to adjust the tetrahydrofuran insoluble part amount of the particulate binding agent to be obtained, a chain transfer agent is preferably used during the emulsion polymerization. Examples of the chain transfer agent include, for example, alkyl mercaptan such as n-hexylmercaptan, n-octylmercaptan, t-octylmercaptan, n-dodecylmercaptan, t-dodecylmercaptan, and n-stearylmercaptan; a xanthogen compound such as dimethyl xanthogen disulfide, and diisopropyl xanthogen disulfide; a thiuram-based compound such as terpinolen, tetramethylthiuram disulfide, tetraethylthiurarn disulfide, and tetramethylthiuram monosulfide; a phenol-based compound such as 2,6-di-t-butyl-4-methylphenol, and styrenated phenol; an allyl compound such as allyl alcohol; a halogenated hydrocarbon compound such as dichormethane, dibromomethane, and carbon tetrabromide; thioglycolic acid, thiomalic acid, 2-ethylhexylthioglycolate, diphenylethylene, and α-methylstyrene dimmer.

Among these, alkylmercaptan is preferably used, and t-dodecylmercaptan is more preferably used. These chain transfer agents may be used alone or in combination of two or more kinds thereof.

The use amount of the chain transfer agent is preferably 0.05 to 2 parts by mass, and more preferably 0.1 to 1 part by mass with respect to 100 parts by mass of the monomer mixture.

In the emulsion polymerization, an anionic surfactant is preferably further used. By using an anionic surfactant, the polymerization stability can be improved.

As the anionic surfactant, a conventionally known anionic surfactant may be used in the emulsion polymerization. Specific examples of the anionic surfactant include a sulfuric ester salt of higher alcohol, such as sodium laurylsulfate, ammonium laurylsulfate, sodium dodecylsulfate, ammonium dodecylsulfate, sodium octylsulfate, sodium decylsulfate, sodium tetradecylsulfate, sodium hexadecylsulfate, and sodium octadecylsulfate; an alkyl benzene sulfuric acid salt such as sodium dodecyl benzene sulfate, sodium lauryl benzene sulfate, and sodium hexadecyl benzene sulfate; an aliphatic sulfuric acid salt such as sodium lauryl sulfate, sodium dodecyl sulfate, and sodium tetradecyl sulfate.

The use amount of the anionic surfactant is preferably 0.5 to 10 parts by mass, and more preferably 1 to 5 parts by mass with respect to 100 parts by mass of the monomer mixture. When the use amount is small, the particle diameter of the particle to be obtained tends to become larger, and when the use amount is large, the particle diameter tends to become smaller. Further, in addition to the anionic surfactant, a non-ionic surfactant, a cationic surfactant, an amphoteric surfactant, and the like can be used in combination.

Furthermore, in the emulsion polymerization, a pH adjuster such as sodium hydroxide, and ammonium; various additives such as a dispersing agent, a chelating agent, an oxygen scavenger, a builder, and a seed latex for particle diameter adjustment can appropriately be used. In particular, the emulsion polymerization using a seed latex is preferable. The seed latex means a dispersion liquid of fine particle that becomes a core of reaction during the emulsion polymerization. The fine particle has a particle diameter of 100 nm or less in many cases. The fine particle is not particularly limited, and for which a general-purpose polymer such as an acrylic polymer is used. According to the seed polymerization method, a particulate binding agent with a relatively uniform particle diameter can be obtained.

While the polymerization temperature when polymerization reaction is performed is not particularly limited, it is usually 0°C to 100°C, and preferably 40°C to 80°C. The emulsion polymerization is performed in such a temperature range, and the polymerization reaction is terminated by adding a polymerization terminator, or by cooling the polymerization system, at a predetermined polymerization conversion rate. The polymerization conversion rate that terminates the polymerization reaction is preferably 93% by mass or more, and more preferably 95% by mass or more.

After the termination of polymerization reaction, as desired, the unreacted monomer is removed, and the pH and the solid content concentration are adjusted, as a result, the particulate binding agent is obtained in the form of being dispersed in a dispersion medium (latex). After that, as needed, the dispersion medium may be replaced, or the dispersion medium may be evaporated, and thus a particulate binding agent may be obtained in the shape of powder.

A dispersing agent, a thickening agent, an anti-aging agent, a defoaming agent, a preservative, an antimicrobial agent, a blister preventing agent, a pH adjuster, and the like, which are known, may be added into a dispersion of the particulate binding agent to be obtained, as needed.

### (Dispersion medium and other components)

The electroconductive adhesive composition for an electrochemical device electrode according to the present invention is a composition in the form of slurry, in which the above-described electroconductive carbon, water-soluble polymer, and particulate binding agent are dispersed in a dispersion medium. Here, as the dispersion medium, water and various organic solvents can be used without any particular limitation, as long as each of the above described components can uniformly be dispersed and can stably be kept the dispersed state. For example, it is preferable to produce the adhesive composition directly without performing any operations of solvent replacement and the like after the above-described emulsion polymerization in the production of the particulate binding agent, from the viewpoint of simplification of production processes, and it is desirable to use a reaction solvent that is the same as that used at the time of the emulsion polymerization, as the dispersion medium. Water is frequently used as the reaction solvent in the emulsion polymerization, and further from the viewpoint of the working environment, it is particularly preferable to use water as the dispersion medium.

Further, a dispersing agent for dispersing each of the above-described components may be contained in the electroconductive adhesive composition for an electrochemical device electrode of the present invention.

Specific examples of the dispersing agent include a cellulose-based polymer such as carboxymethyl cellulose, methyl cellulose, ethyl cellulose, and hydroxypropyl cellulose, and the ammonium salt and alkali metal salt thereof, a poly(meth)acrylic acid salt such as sodium poly(meth)acrylate, polyvinyl alcohol, modified polyvinyl alcohol, polyethyleneoxide, polyvinylpyrrolidone, polycarboxylic acid, oxidized starch, starch phosphate, casein, and various modified starches. These dispersing agents may be used alone or in combination of two or more kinds thereof, respectively.

### (Electroconductive adhesive composition for an electrochemical device electrode)

While the content ratio of each component in the electroconductive adhesive composition for an electrochemical device electrode according to the present invention is not particularly limited, the content ratio of electroconductive carbon is 10 to 25% by mass, preferably 12 to 23% by mass, and particularly preferably 14 to 20% by mass, from the viewpoint that an electroconductive adhesive layer having better electroconductivity can be formed, and viscosity characteristics with which high-speed coating of an adhesive composition can be performed are obtained; the content ratio of the water-soluble polymer is 0.5 to 3% by mass, preferably 0.7 to 2.7% by mass, and more preferably 1 to 2.4% by mass, from the viewpoint that an electroconductive adhesive layer is obtained which has favorable adhesion and low internal resistance; and the content ratio of the particulate binding agent is 0.5 to 10% by mass, preferably 0.7 to 8% by mass, and more preferably 1 to 6% by mass, from the viewpoint that an electroconductive adhesive layer is obtained which has favorable adhesion and low internal resistance. The remaining part is a dispersion medium, and various components to be added as needed.

The content ratio of the dispersion medium is 62 to 89% by mass, preferably 66 to 87% by mass, and more preferably 70 to 84% by mass, from the viewpoint that an adhesive composition is obtained which has viscosity characteristics with which high-speed coating can be performed, and the drying speed is high when the electroconductive adhesive layer is formed.

Further, the pH of the electroconductive adhesive composition for an electrochemical device electrode of the present invention is 6 to 10, preferably 6.5 to 9.7, and more preferably 7.0 to 9.5, from the viewpoint that an electrode with lower resistance is obtained without corroding the current collector.

The electroconductive adhesive composition for an electrochemical device electrode is in a slurry form, and the viscosity of the composition depends on the applying method, but it is usually 10 to 10,000 mPa·s, preferably 20 to 5,000 mPa·s, and particularly preferably 50 to 2,000 mPa·s. When the viscosity of the adhesive composition is within the range, the electroconductive adhesive layer can be formed uniformly on the current collector.

The production method of the adhesive composition is not particularly limited, and may be any measures as long as each of the above-described solid components can be dispersed in the dispersion medium. For example, a dispersion of the particulate binding agent, the water-soluble polymer, the electroconductive carbon, and optional components to be added as needed may be mixed all at once, then a dispersion medium may be added as needed, and thus the solid content concentration of the dispersion may be adjusted. Further, the electroconductive carbon may be added in the state dispersed in any dispersion medium. Further, the particulate binding agent is brought into contact with the electroconductive carbon, and then other components may be added, from the viewpoint of obtaining the adhesive composition having favorable dispersibility.

### (Current collector with an adhesive layer)

The current collector with an adhesive layer of the present invention can be obtained by applying the above-described electroconductive adhesive composition for an electrochemical device electrode to the current collector for electrochemical device and drying it.

As the material of the current collector, for example, metal, carbon, an electroconductive polymer, and the like are used, and suitably metal is used. As the metal for current collector, usually aluminum, platinum, nickel, tantalum, titanium, stainless steel, copper, other alloys, and the like are used. Among these, copper, aluminum, or aluminum alloy is preferably used, from the viewpoint of the electroconductivity and the voltage resistance.

The thickness of the current collector is 5 to 100 µm, preferably 8 to 70 µm, and particularly preferably 10 to 50 µm.

The forming method of the electroconductive adhesive layer is not particularly limited. For example, the electroconductive adhesive layer is formed onto the current collector by a doctor blade method, a dip method, a reverse roll method, a direct roll method, a gravure method, an extrusion method, a die coat method, a brush coating, or the like. Also, the electroconductive adhesive layer is formed on a release paper, and then the formed layer may be transferred to the current collector.

Examples of the drying method of electroconductive adhesive layer include, for example, drying with warm air, hot air, or low humidity air; vacuum drying; and a drying method by irradiation with (far) infrared ray, electron beam, or the like. Among these, a drying method by hot air, and a drying method by irradiation with far infrared ray are preferable. As the drying temperature and the drying time, a temperature at which, and a time period for which the solvent in the adhesive composition applied onto the current collector can be completely removed are preferable, and the drying temperature is usually 50°C to 300°C, and preferably 80°C to 250°C. The drying time is usually 2 hours or less, and preferably 5 seconds to 30 minutes.

The thickness of the electroconductive adhesive layer is 0.5 to 5 µm, preferably 0.5 to 4 µm, and particularly preferably 0.5 to 3 µm, from the viewpoint that the electrode having favorable adhesion to the electrode active material layer described bellow, and having lower resistance is obtained.

The electroconductive adhesive layer has a composition corresponding to the solid content composition of the electroconductive adhesive composition for an electrochemical device electrode, and contains an electroconductive carbon, a water-soluble polymer, and a particulate binding agent.

### (Electrode for electrochemical device)

The electrode for electrochemical device of the present invention has an electrode active material layer on the electroconductive adhesive layer of the current collector with an adhesive layer. The electrode active material layer is composed of an electrode active material and an electroconductive material for an electrode, and a binder for an electrode, and is prepared from the slurry for an electrode (hereinafter, sometimes referred to as "slurry") containing these components.

### (Electrode active material)

The electrode active material may be a negative electrode active material, or may be a positive electrode active material. The electrode active material is a substance that transfers electrons in a battery.

The positive electrode active material is a compound capable of occluding and releasing lithium ions. The positive electrode active material is roughly classified into a positive electrode active material composed of an inorganic compound and a positive electrode active material composed of an organic compound.

Examples of the positive electrode active material composed of an inorganic compound include a transition metal oxide, a composite oxide of lithium and a transition metal, and a transition metal sulfide. As the transition metal, Fe, Co, Ni, Mn, and the like are used. Specific examples of the inorganic compound to be used for a positive electrode active material include a lithium-containing composite metal oxide such as LiCoO₂, LiNiO₂, LiMnO₂, LiMn₂O₄, LiFePO₄, and LiFeVO₄; a transition metal sulfide such as TiS₂, TiS₃, and amorphous MoS₂; and a transition metal oxide such as Cu₂V₂O₃, amorphous V₂O-P₂O₅, MoO₃, V₂O₅, and V₆O₁₃. These compounds may be a partially substituted with another element.

Examples of the positive electrode active material composed of an organic compound include, for example, polyaniline, polypyrrole, polyacene, a disulfide-based compound, a polysulfide-based compound, and an N-fluoro pyridinium salt. Note that, the positive electrode active material may be a mixture of the above-described inorganic compound and organic compound.

Examples of the negative electrode active material include an allotrope of carbon such as graphite, and coke. A negative electrode active material composed of the allotrope of carbon can be used in the form of a mixture with a metal, a metal salt, an oxide, and the like, or in the form of a coating body. Further, as the negative electrode active material, an oxide or a sulfate of silicon, tin, zinc, manganese, iron, nickel, and the like, metal lithium, a lithium alloy such as Li-Al, Li-Bi-Cd, and Li-Sn-Cd, a lithium transition metal nitride, silicone, and the like may be used.

The volume average particle diameter of the electrode active material is usually 0.01 to 100 µm, preferably 0.05 to 50 µm, and more preferably 0.1 to 20 µm, in both of the positive electrode active material and the negative electrode active material. These electrode active materials may be used alone or in combination of two or more kinds thereof, respectively.

### (Electroconductive material for electrode)

The electroconductive material for an electrode has electroconductivity, and is composed of an allotrope of carbon in the form of particles, which does not have any fine pores that may form an electric double layer. Specific examples of the electroconductive material for an electrode include electroconductive carbon black such as furnace black, acetylene black, and ketjen black (registered trademark of Akzo Nobel Chemicals International B.V.). Among these, acetylene black and furnace black are preferable.

### (Binder for an electrode)

The binder for an electrode is not particularly limited, as long as being a compound that can bind the electrode active material and the electroconductive material for an electrode to each other.

The amount of the binder for an electrode is usually 0.1 to 50 parts by mass, preferably 0.5 to 20 parts by mass, and more preferably 1 to 10 parts by mass, with respect to 100 parts by mass of the electrode active material, from the viewpoint that the adhesion between the electrode active material layer to be obtained and the electroconductive adhesive layer to be obtained can sufficiently be ensured, and the capacity of a lithium ion battery can be made higher and the internal resistance can be made lower in a lithium ion battery.

### (Electrode active material layer)

The electrode active material layer is provided on the electroconductive adhesive layer, but the forming method is not particularly limited. The slurry for forming an electrode active material layer can contain an electrode active material, an electroconductive material for an electrode, and a binder for an electrode as the essential component, and other dispersing agents and additives as needed. Specific examples of other dispersing agents include polyvinylidene fluoride, polytetrafluoroethylene, a cellulose-based polymer such as carboxymethyl cellulose, methyl cellulose, ethyl cellulose, and hydroxypropyl cellulose, and the ammonium salt or the alkali metal salt thereof; a poly(meth)acrylic acid salt such as sodium poly(meth)acrylate; polyvinyl alcohol, modified polyvinyl alcohol, polyethylene oxide, polyvinyl pyrrolidone, polycarboxylic acid, oxidized starch, starch phosphate, casein, and various modified starch. These dispersing agents may be used alone or in combination of two or more kinds thereof, respectively. While the amount of these dispersing agents is not particularly limited, it is usually 0.1 to 10 parts by mass, preferably 0.5 to 5 parts by mass, and more preferably 0.8 to 2 parts by mass, with respect to 100 parts by mass of the electrode active material.

In the case of forming the electrode active material layer, the slurry for an electrode in the form of a paste (slurry for a positive electrode or slurry for a negative electrode) can be produced by the kneading of an electrode active material, an electroconductive material for an electrode, and a binder for an electrode as the essential component, and also other dispersing agents and additives in water or an organic solvent such as N-methyl-2-pyrrolidone or tetrahydrofuran.

While the solvent used for obtaining the slurry is not particularly limited, a solvent capable of dissolving the dispersing agents is suitably used in the case where the above-described dispersing agents are used. Specifically, water is usually used, however the organic solvent can also be used, and a mixed solvent of water and an organic solvent may be used. Examples of the organic solvent include, for example, alkyl alcohols such as methyl alcohol, ethyl alcohol, and propyl alcohol; alkyl ketones such as acetone, and methylethyl ketone; ethers such as tetrahydrofuran, dioxiane, and diglyme; amides such as diethylformamide, dimethylacetoamide, N-methyl-2-pyrrolidone, and dimethyl imidazolidinone; and a sulfur-based solvent such as dimethylsulfoxide, and sulfolane. Among these organic solvents, alcohols are preferable. The slurry for an electrode is preferably a water-based slurry in which water is used as the dispersion medium, from the viewpoint that the drying of the electrode active material layer is easy and the load on the environment is small. When water and an organic solvent having a boiling point lower than that the water has are used in combination, the drying speed can be made faster during the spray drying. Further, according to the amount or the kind of the organic solvent to be used in combination with water, the dispersibility of the binder for an electrode or the solubility of the dispersing agent changes. As a result, the viscosity or the fluidity of the slurry can be adjusted, and thus the production efficiency can be improved.

The amount of the solvent to be used for preparing the slurry is an amount in the range that the solid content concentration of the slurry is usually 1 to 90% by mass, preferably 5 to 85% by mass, and more preferably 10 to 80% by mass, from the viewpoint of dispersing each component uniformly.

The method or the procedure of dispersing or dissolving the electrode active material, the electroconductive material for an electrode, the binder for an electrode, and other dispersing agents and additives into the solvent is not particularly limited, and examples of the method or the procedure include, for example, a method of adding and mixing the electrode active material, the electroconductive material for an electrode, the binder for an electrode, and other dispersing agents or additives into a solvent; a method of dissolving the dispersing agent into a solvent, then adding and mixing the binder for an electrode, which has been dispersed in a solvent, and finally adding and mixing the electrode active material and the electroconductive material for an electrode; and a method of adding and mixing the electrode active material and the electroconductive material for an electrode into the binder for an electrode, which has been dispersed in a solvent, then adding and mixing the dispersing agent dissolved in a solvent into the resultant mixture. Examples of the mixing measures include, for example, a mixing apparatus such as a ball mill, a sand mill, a bead mill, a pigment disperser, a grinding machine, an ultrasonic disperser, a homogenizer, a homomixer, and a planetary mixer. The mixing is usually performed at a temperature in the range of a room temperature to 80°C for 10 minutes to several hours.

The viscosity of the slurry is usually in the range of 10 to 100,000 mPa·s, preferably in the range of 30 to 50,000 mPa·s, and more preferably in the range of 50 to 20,000 mPa·s at a room temperature, from the viewpoint that the productivity can be improved.

The applying method of the slurry onto the electroconductive adhesive layer is not particularly limited. For example, methods such as a doctor blade method, a dip method, a reverse roll method, a direct roll method, a gravure method, an extrusion method, and a brush coating method are exemplified. The applying thickness of the slurry is suitably determined depending on the thickness of the electrode active material layer to be intended.

Examples of the drying method include, for example, drying with warm air, hot air, or low humidity air; vacuum drying; and a drying method by irradiation with (far) infrared ray, electron beam, or the like. Among these, a drying method by irradiation with far infrared ray is preferable. As the drying temperature and the drying time, a temperature at which, and a time period for which the solvent in the slurry applied on the current collector can be completely removed are preferable. The drying temperature is 100°C to 300°C, and preferably 120°C to 250°C. The drying time is usually 5 minutes to 100 hours, and preferably 10 minutes to 20 hours.

While the density of the electrode active material layer is not particularly limited, it is usually 0.30 to 10 g/cm³, preferably 0.35 to 8.0 g/cm³, and more preferably 0.40 to 6.0 g/cm³. Further, while the thickness of the electrode active material layer is not particularly limited, it is usually 5 to 1000 µm, preferably 20 to 500 µm, and more preferably 30 to 300 µm.

### (Electrochemical device)

Examples of the use embodiment of an electrode for an electrochemical device include a lithium ion secondary battery, an electric double layer capacitor, a lithium ion capacitor, a sodium battery, and a magnesium battery, in which the electrode has been used, and a lithium ion secondary battery is suitable. For example, the lithium ion secondary battery consists of the above-described electrode for an electrochemical device, a separator, and an electrolytic solution.

### (Separator)

The separator is not particularly limited as long as being capable of insulating between the electrodes for an electrochemical device, and of passing positive ions and negative ions therethrough. Specific examples of the separator include (a) a porous separator having pores, (b) a porous separator having a polymer coat layer formed on one surface or both surfaces thereof, or (c) a porous separator having a porous resin coat layer formed thereon that contains an inorganic ceramic powder. As the non-limiting example of these, a polypropylene-based, a polyethylene-based, a polyolefin-based, or an alamid-based porous separator; a polymer film for solid polymer electrolyte or for gel polymer electrolyte such as polyvinylidene fluoride, polyethylene oxide, polyacrylonitrile, or a polyvinylidene fluoridehexafluoropropylene copolymer; a separator coated with a gelated polymer coat layer; a separator coated with a porous membrane layer composed of an inorganic filler, and a dispersing agent for the inorganic filler; or the like can be used. The separator is arranged between the electrodes for an electrochemical device such that each of a pair of the electrode active material layers is opposed to each other; and thus the device is obtained. While the thickness of the separator is appropriately selected depending on the intended purpose of use, it is usually 1 to 100 µm, preferably 10 to 80 µm, and more preferably 15 to 60 µm.

### (Electrolytic Solution)

While the electrolytic solution is not particularly limited, for example, a solution obtained by dissolving a lithium salt into a non-aqueous solvent as a supporting electrolyte may be used. Examples of the lithium salt include, for example, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li, which are easily dissolved in a solvent and show a high degree of dissociation, are suitably used. These may be used alone or as a mixture of two or more kinds thereof in combination. The amount of the supporting electrolyte is usually 1% by mass or more and preferably 5% by mass or more, and usually 30% by mass or less and preferably 20% by mass or less, with respect to the amount of the electrolytic solution. When the amount of the supporting electrolyte is extremely small or extremely large, the ionic electroconductivity is reduced, and the charging property and discharging property of the battery are deteriorated.

While the solvent used for the electrolytic solution is not particularly limited as long as being capable of dissolving the supporting electrolyte, usually, alkyl carbonates such as dimethyl carbonate (DMC), ethylene carbonate (EC), diethyl carbonate (DEC), propylene carbonate (C), butylene carbonate (C), and methylethyl carbonate (MEC); esters such as γ-butyrolactone, and methyl formate; ethers such as 1,2-dimethoxyethane, and tetrahydrofuran; and sulfur containing compounds such as sulfolane, and dimethylsulfoxide are used. In particular, dimethyl carbonate, ethylene carbonate, propylene carbonate, diethyl carbonate, and methylethyl carbonate are preferable since these can easily obtain high ion electroconductivity, and have a wide range of use temperature. These may be used alone or as a mixture of two or more kinds thereof in combination. Further, it is possible to add an additive to the electrolytic solution for use. Furthermore, as the additive, a carbonate-based compound such as vinylene carbonate (VC) is preferable.

Examples of the electrolytic solution other than the above can include a gel polymer electrolyte in which a polymer electrolyte such as polyethylene oxide, and polyacrylonitrile is impregnated with an electrolytic solution, and an inorganic solid electrolyte such as lithium sulfide, LiI, Li₃N, and Li₂S-P₂S₅ glass-ceramic.

The secondary battery is obtained as follows: the negative electrode and the positive electrode are overlaid with each other placing a separator therebetween, the resultant is placed in a battery case by being wound, folded, or the like depending on the shape of the battery, then a electrolytic solution is poured into the battery case, and the battery case is sealed. Further, as needed, an expanded metal, an overcurrent prevention device such as a fuse, and a PTC device, a lead plate, and the like are also placed into the battery case, as a result, the increase of the internal pressure in the battery, and excessive charge-discharge can be prevented. The shape of the battery may be any one of a laminate cell type, a coin type, a button type, a sheet type, a cylinder type, a square type, and a flat type or the like.

### {Examples}

Hereinafter, the present invention will be explained by way of examples, but the present invention is not limited at all by these examples. Each property is evaluated by the following methods. Note that, "parts" and "%" in the present Examples mean "parts by mass" and "% by mass", respectively, unless otherwise indicated.

### (Cross-cut test)

11 cuts in each vertical and horizontal direction of crossing at right angles were made at 1 mm intervals by using a cutter on the electroconductive adhesive layer formed onto a current collector, as a result, a 1 mm square grid pattern with 100 squares was obtained. A cellophane adhesive tape (manufactured by SEKISUI CHEMICAL CO., LTD.) was stuck to the grid pattern, then the adhesive tape was peeled off by pulling in the direction perpendicular to the surface, and the ratio of the squares that had not been peeled off was calculated. The results were evaluated according to the following criteria, and were shown in Table 1.
A: The number of peeled squares is zero.
B: The number of peeled squares is one or more to less than 10.
C: The number of peeled squares is 10 or more to less than 20.
D: The number of peeled squares is 20 or more.

### (High temperature cycle characteristics)

The lithium ion secondary battery of a laminate type cell, which had been produced in Examples and Comparative Examples, was left to stand for 24 hours, then a charge-discharge operation was performed at a charge-discharge rate of 4.2V, 0.1C, and the initial capacity C₀ was measured. Further, the charge-discharge was repeated under the environment of 60°C, and the capacity C₂ after 100 cycles was measured. The high temperature cycle characteristics were evaluated according to the capacity change rate ΔC_{c} shown by ΔC_{c}= C₂/C₀× 100 (%). A higher value of the capacity change rate ΔC_{c} indicates that the high temperature cycle characteristics are excellent.

As the evaluation criteria of cycle characteristics, the charge-discharge capacity retention rate was evaluated according to the following criteria. A higher value of the charge-discharge capacity retention rate indicates that the high temperature cycle characteristics are excellent.
A: The charge-discharge capacity retention rate is 80% or more.
B: The charge-discharge capacity retention rate is 75% or more to less than 80%.
C: The charge-discharge capacity retention rate is 70% or more to less than 75%.
D: The charge-discharge capacity retention rate is less than 70%.

### (High-speed coating property)

The surface of the electroconductive adhesive layer formed on an aluminum current collector was observed, and the incidence of uncoated part on the substrate was determined. The results were evaluated according to the following criteria. A lower incidence of uncoated part indicates that it is favorable.
A: The uncoated part is 0% or more to less than 1%.
B: The uncoated part is 1% or more to less than 3%.
C: The uncoated part is 3% or more to less than 5%.
D: The uncoated part is 5% or more.

### {Example 1}

### (Production of particulate binding agent)

33 parts of 1,3-butadiene, 1.5 parts of methacrylic acid, 65.5 parts of styrene, 4 parts of sodium dodecyl benzene sulfonate as an emulsifier, 150 parts of ion-exchanged water, and 0.5 part of potassium persulfate as a polymerization initiator were placed into a 5 MPa pressure resistant container with a stirrer, and sufficiently stirred, then the resultant was heated to 50°C to initiate the polymerization. When the polymerization conversion rate became 96%, the reaction mixture was cooled to stop the reaction. As a result, an aqueous dispersion liquid containing a particulate binding agent composed of styrene-butadiene latex (hereinafter, appropriately referred to as "SBR latex") was obtained. 5% sodium hydroxide aqueous solution was added to the thus obtained aqueous dispersion liquid containing a particulate binding agent to adjust the pH to 8.0, and then unreacted monomers were removed by a heating and distillation under reduced pressure. After that, the resultant was cooled to 30°C or lower, and thus an aqueous dispersion liquid containing a particulate binding agent was obtained. When a weight-average molecular weight of the obtained particulate binding agent was measured, it was 1,500,000.

### (Production of adhesive composition)

100 parts of electroconductive carbon (DENKA BLACK), 10 parts of the one in which ISOBAM-04 (Mw = 60,000, manufactured by KURARAY CO., LTD) as an isobutylene-maleic anhydride copolymer was dissolved in ammonia water to adjust the pH to 8.0, 10 parts of SBR latex as the particulate binding agent, and 500 parts of ion-exchanged water were added and mixed by a bead mill, as a result, an adhesive composition was obtained. Note that, the mass ratio in the adhesive composition was as follows: electroconductive carbon : isobutylene-maleic anhydride copolymer: particulate binding agent: dispersion medium = 16.1: 1.6: 1.6: 80.6.

### (Forming of electroconductive adhesive layer)

The adhesive composition was applied on an aluminum current collector with a wire bar using a casting method, and on both of the front and back surfaces of the current collector at the forming speed of 20 m/min, then the resultant was dried at 120°C for 2 minutes, as a result, an electroconductive adhesive layer having a thickness of 1.2 µm was formed.

### (Production of electrode)

100 parts of lithium cobalate having a volume average particle diameter of 8 µm as the positive electrode active material, 2.0 parts of a polyvinylidene fluoride solution in terms of a solid content as the binder for an electrode (KF polymer W # 1100: manufactured by Kureha Corporation), 5 parts of acetylene black (DENKA BLACK powder: manufactured by DENKI KAGAKU KOGYO KABUSHIKI KAISHA) as the electroconductive material for an electrode, and N-methyl-2-pyrrolidone were mixed by a planetary mixer such that the total solid content concentration became 50%, as a result, a slurry for a positive electrode was prepared.

The slurry for a positive electrode was applied on both of the front and back surfaces of the aluminum current collector on which an electroconductive adhesive layer had been formed as described above, at an electrode forming speed of 5 m/min, and the resultant was dried at 60°C for 10 minutes, then further dried at 120°C for 20 minutes. The resultant was punched into a 5 cm square, as a result, a positive electrode for a lithium ion secondary battery, having an electrode active material layer for a positive electrode having a thickness of 100 µm per one surface, was obtained.

100 parts of graphite having a volume average particle diameter of 3.7 µm (KS-6: manufactured by TIMCAL Graphite & Carbon) as the negative electrode active material, 2.0 parts of 1.5% aqueous solution of carboxymethylcellulose ammonium (DN-800H: manufactured by Daicel Corporation) in terms of a solid content as the dispersing agent, 5 parts of acetylene black (DENKA BLACK powder: manufactured by DENKI KAGAKU KOGYO KABUSHIKI KAISHA) as the electroconductive material for an electrode, 3.0 parts of 40% aqueous dispersion of a diene polymer having a number average particle diameter of 0.18 µm and a glass transition temperature of -48°C in terms of a solid content as the binder for an electrode, and ion-exchanged water were mixed such that the total solid content concentration became 35%, as a result, a slurry for a negative electrode was prepared.

The above-described slurry for a negative electrode was applied on one surface of a copper foil having a thickness of 18 µm using a comma coater such that the thickness after the drying became about 100 µm, and the resultant was dried at 60°C for 20 minutes, then heating treatment was performed at 150°C for 20 minutes, as a result, an electrode active material layer for a negative electrode was formed. Subsequently, the resultant electrode active material layer for a negative electrode was rolled by a roll press to obtain a negative electrode for a lithium secondary battery having a thickness of 50 µm.

### (Production of lithium ion secondary battery)

A lithium ion secondary battery in a multilayer type laminate cell shape was prepared using the positive electrode for a lithium ion secondary battery, the negative electrode for a lithium ion secondary battery, and a separator made of polypropylene (the thickness was 25 µm). As the electrolytic solution, the one in which LiPF₆ was dissolved at a concentration of 1.0 mol/L in a mixed solvent of ethylene carbonate and diethyl carbonate with the mass ratio of 1 : 2 was used.

### {Example 2}

The forming of an electroconductive adhesive layer and the production of a lithium ion secondary battery were performed in the same manner as in Example 1 except that the isobutylene-maleic anhydride copolymer used for the production of an adhesive composition was changed to ISOBAM-18 (Mw = 320,000, manufactured by KURARAY CO., LTD).

### {Example 3}

The forming of an electroconductive adhesive layer and the production of a lithium ion secondary battery were performed in the same manner as in Example 1 except that the isobutylene-maleic anhydride copolymer used for the production of an adhesive composition was changed to ISOBAM-104 (Mw = 60,000, manufactured by KURARAY CO., LTD) that was an isobutylene-maleic anhydride copolymer containing a maleic acid amine-modified unit. Note that, the pH of the adhesive composition was adjusted to 9.2.

### {Example 4}

The forming of an electroconductive adhesive layer and the production of a lithium ion secondary battery were performed in the same manner as in Example 1 except that the isobutylene-maleic anhydride copolymer used for the production of an adhesive composition was changed to ISOBAM-304 (Mw = 60,000, manufactured by KURARAY CO., LTD) that was an isobutylene-maleic anhydride copolymer containing maleimide (maleic acid imide-modified unit). Note that, the pH of the adhesive composition was adjusted to 9.1.

### {Comparative Example 1}

The forming of an electroconductive adhesive layer and the production of a lithium ion secondary battery were performed in the same manner as in Example 1 except that the isobutylene-maleic anhydride copolymer used for the production of an adhesive composition was changed to polyvinyl alcohol (Mw = 50,000). Note that, the pH of the adhesive composition was adjusted to 7.0. Note that, the mass ratio in the adhesive composition was as follows: electroconductive carbon: water-soluble polymer: particulate binding agent: dispersion medium = 16.1: 1.6: 1.6: 80.6.

### {Comparative Example 2}

The forming of an electroconductive adhesive layer and the production of a lithium ion secondary battery were performed in the same manner as in Example 1 except that the isobutylene-maleic anhydride copolymer used for the production of an adhesive composition was changed to chitosan-maleic anhydride cross-linked polymer (Mw = 40,000) in which chitin had been cross-linked with maleic anhydride.

### {Comparative Example 3}

The production of a lithium ion secondary battery was performed in the same manner as in Example 1 except that the particulate binding agent was not used when the adhesive composition was produced. Note that, the mass ratio in the adhesive composition was as follows: electroconductive carbon : water-soluble polymer : particulate binding agent : dispersion medium = 16.1 : 3.2 : 0 : 80.6.

**{Table 1}**

| | | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|---|
| | | Electroconductive carbon (mass (parts)) | 100 | 100 | 100 | 100 | 100 | 100 | 100 |
| | Electroconductive adhesive composition | Water-soluble polymer = isobutylene-maleic anhydride copolymer (the upper row: kind, and the lower row: mass (parts)) | ISOBAM-04 | ISOBAM-18 | ISOBAM-104 | ISOBAM-304 | Polyvinyl alcohol | Chitosan-maleic anhydride cross-linked polymer in which chitin is cross-linked with maleic anhydride | ISOBAM-04 |
| | | | 10 | 10 | 10 | 10 | 10 | 10 | 20 |
| | | Particulate binding agent (mass(parts)) | 10 | 10 | 10 | 10 | 10 | 10 | 0 |
| Adhesive composition | | Dispersing medium (mass(parts)) | 500 | 500 | 500 | 500 | 500 | 500 | 500 |
| | | Electroconductive carbon | 16.1% | 16.1% | 16.1% | 16.1% | 16.1% | 16.1% | 16.1% |
| | | Water-soluble polymer = isobutylene-maleic anhydride copolymer | 1.6% | 1.6% | 1.6% | 1.6% | - | - | 3.2% |
| | Ratio (% by mass) | Water-soluble polymer in Comparative Examples | - | - | - | - | 1.6% | 1.6% | - |
| | | Particulate binding agent | 1.6% | 1.6% | 1.6% | 1.6% | 1.6% | 1.6% | - |
| | | Dispersing medium | 80.6% | 180.6% | 80.6% | 80.6% | 80.6% | 80.6% | 80.6% |
| | Adhesive composition pH | | 8.0 | 8.0 | 9.2 | 9.1 | 7 | 8 | 8 |
| Water-soluble polymer physical property | Molecular weight (Mw) | | 60,000 | 320,000 | 60,000 | 60,000 | 50,000 | 140,000 | 60,000 |
| | Imide modified, amine modified | Maleic acid imide-modified | - | - | - | ○ | - | - | - |
| | | Maleic acid amine-modified | - | - | ○ | - | - | - | - |
| Evaluation items | Cross-cut test | | B | A | A | A | C | B | C |
| | High temperature cycle characteristics | | B | B | A | A | D | C | C |
| | High-speed coating property | | A | B | B | A | C | C | B |

As shown in Table 1, when the electroconductive adhesive layer was formed using an adhesive composition containing an electroconductive carbon, a water-soluble polymer containing a structural unit (a), a particulate binding agent, and a dispersion medium, all of a result of the cross-cut test, the high temperature cycle characteristics, and the high-speed coating property were favorable.

## Claims

1. An electroconductive adhesive composition for an electrochemical device electrode, comprising:
an electroconductive carbon,
a particulate binding agent, and
a dispersion medium, **characterized in that** the electroconductive adhesive composition further comprises a water-soluble polymer, wherein the water-soluble polymer is an isobutylene-maleic anhydride copolymer containing a structural unit (a) represented by the following general formula (I) 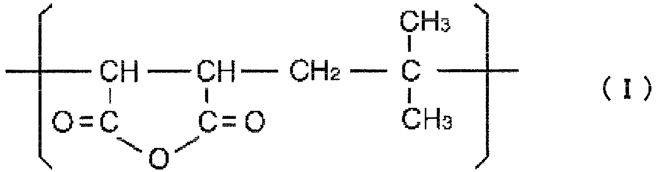 , and is partially hydrolyzed.

2. The electroconductive adhesive composition for an electrochemical device electrode according to Claim 1,
wherein a molecular weight (Mw) of the water-soluble polymer is 30,000 to 300,000.

3. The electroconductive adhesive composition for an electrochemical device electrode according to Claim 1 or 2,
wherein the water-soluble polymer contains a structural unit (b) represented by the following general formula (II) 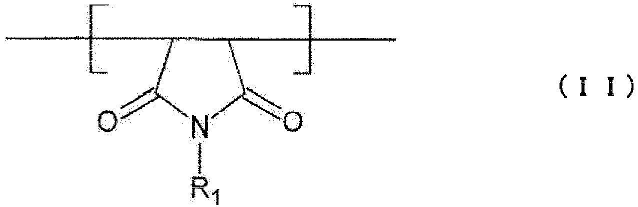 wherein R₁ is at least one functional group selected from the group consisting of a hydrogen, an alkyl group having 1 to 6 carbon atoms, a cycloalkyl group having 3 to 12 carbon atoms, a phenyl group, and a hydroxyphenyl group; or/and
a structural unit (c) represented by the following general formula (III).

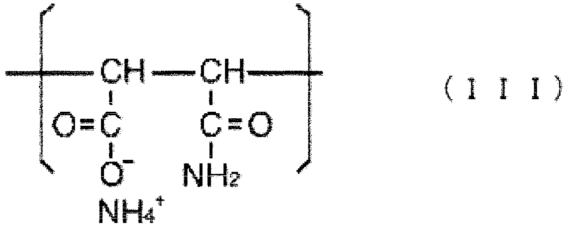

4. The electroconductive adhesive composition for an electrochemical device electrode according to any one of Claims 1 to 3,
wherein a content ratio of the structural unit (a) to the structural unit (b) and the structural unit (c) is, the structural unit (a) / the structural unit (b) and the structural unit (c) = 25/75 to 75/25 in a molar ratio, in the water-soluble polymer.

5. The electroconductive adhesive composition for an electrochemical device electrode according to any one of Claims 1 to 4,
wherein a content ratio of the electroconductive carbon is 8 to 38% by mass,
a content ratio of the water-soluble polymer is 2 to 4% by mass,
a content ratio of the particulate binding agent is 2 to 20% by mass, and
a content ratio of the dispersion medium is 60 to 90% by mass.

6. The electroconductive adhesive composition for an electrochemical device electrode according to any one of Claims 1 to 5,
wherein a pH of the electroconductive adhesive composition for an electrochemical device electrode is 6 to 10.

7. A current collector with an adhesive layer, comprising:
an electroconductive adhesive layer obtained by applying the electroconductive adhesive composition for an electrochemical device electrode according to any one of Claims 1 to 6 onto a current collector and drying the electroconductive adhesive composition for an electrochemical device electrode.

8. The current collector with an adhesive layer according to Claim 7,
wherein a thickness of the electroconductive adhesive layer is 0.5 to 5 µm.

9. An electrode for an electrochemical device, comprising:
an electrode active material layer containing an electrode active material, on the electroconductive adhesive layer of the current collector with an adhesive layer according to Claim 7 or 8.

## Patentansprüche

1. Eine elektrisch leitende Klebstoffzusammensetzung für eine Elektrode einer elektrochemischen Vorrichtung, umfassend:
einen elektrisch leitenden Kohlenstoff,
ein partikelförmiges Bindemittel, und
ein Dispersionsmedium,
**dadurch gekennzeichnet, dass** die elektrisch leitende Klebstoffzusammensetzung ferner ein wasserlösliches Polymer umfasst,
wobei das wasserlösliche Polymer ein Isobutylen-Maleinsäureanhydrid-Copolymer ist,
das eine Struktureinheit (a) der folgenden allgemeinen Formel (I) enthält 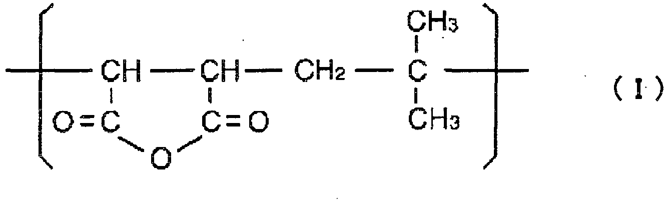 ,
und teilweise hydrolysiert ist.

2. Die elektrisch leitende Klebstoffzusammensetzung für eine Elektrode einer elektrochemischen Vorrichtung gemäß Anspruch 1,
wobei ein Molekulargewicht (Mw) des wasserlöslichen Polymers 30.000 bis 300.000 beträgt.

3. Die elektrisch leitende Klebstoffzusammensetzung für eine Elektrode einer elektrochemischen Vorrichtung gemäß Anspruch 1 oder 2,
wobei das wasserlösliche Polymer eine Struktureinheit (b) der folgenden allgemeinen Formel (II) 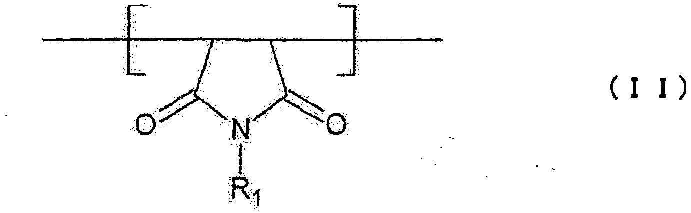 wobei R₁ mindestens eine funktionelle Gruppe, ausgewählt aus der Gruppe bestehend aus einem Wasserstoff, einer Alkylgruppe mit 1 bis 6 Kohlenstoffatomen, einer Cycloalkylgruppe mit 3 bis 12 Kohlenstoffatomen, einer Phenylgruppe, und einer Hydroxyphenylgruppe ist; oder/und
eine Struktureinheit (c) der folgenden allgemeinen Formel (III) 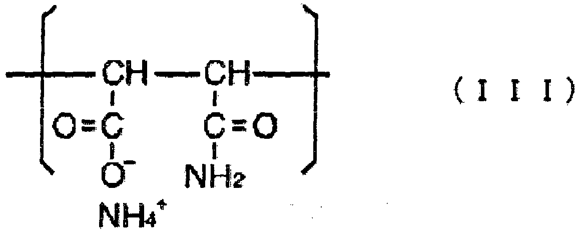 enthält.

4. Die elektrisch leitende Klebstoffzusammensetzung für eine Elektrode einer elektrochemischen Vorrichtung gemäß einem der Ansprüche 1 bis 3,
wobei ein Verhältnis des Gehalts der Struktureinheit (a) zu der Struktureinheit (b) und der Struktureinheit (c) gleich die Struktureinheit (a)/die Struktureinheit (b) und die Struktureinheit (c) = 25/75 bis 75/25, in einem Molverhältnis, in dem wasserlöslichen Polymer, ist.

5. Die elektrisch leitende Klebstoffzusammensetzung für eine Elektrode einer elektrochemischen Vorrichtung gemäß einem der Ansprüche 1 bis 4,
wobei ein Anteil des Gehalts des elektrisch leitenden Kohlenstoffs 8 bis 38 Massen-% beträgt,
ein Anteil des Gehalts des wasserlöslichen Polymers 2 bis 4 Massen-% beträgt,
ein Anteil des Gehalts des partikelförmigen Bindemittels 2 bis 20 Massen-% beträgt, und
ein Anteil des Gehalts des Dispersionsmediums 60 bis 90 Massen-% beträgt.

6. Die elektrisch leitende Klebstoffzusammensetzung für eine Elektrode einer elektrochemischen Vorrichtung gemäß einem der Ansprüche 1 bis 5,
wobei ein pH-Wert der elektrisch leitenden Klebstoffzusammensetzung für eine Elektrode einer elektrochemischen Vorrichtung 6 bis 10 beträgt.

7. Ein Stromabnehmer mit einer Klebstoffschicht, umfassend:
eine elektrisch leitende Klebstoffschicht, die durch Aufbringen der elektrisch leitenden Klebstoffzusammensetzung für eine Elektrode einer elektrochemischen Vorrichtung gemäß einem der Ansprüche 1 bis 6 auf einen Stromabnehmer und Trocknen der elektrisch leitenden Klebstoffzusammensetzung für eine Elektrode einer elektrochemischen Vorrichtung erhalten wird.

8. Der Stromabnehmer mit einer Klebstoffschicht gemäß Anspruch 7,
wobei eine Dicke der elektrisch leitenden Klebstoffschicht 0,5 bis 5 µm beträgt.

9. Eine Elektrode für eine elektrochemische Vorrichtung, umfassend:
eine Schicht eines Elektrodenaktivmaterials enthaltend ein Elektrodenaktivmaterial auf der elektrisch leitenden Klebstoffschicht des Stromabnehmers mit einer Klebstoffschicht gemäß Anspruch 7 oder 8.

## Revendications

1. Composition adhésive électro-conductrice pour une électrode de dispositif électrochimique, comprenant :
un carbone électro-conducteur,
un agent de liaison particulaire, et
un milieu de dispersion,
**caractérisée en ce que** la composition adhésive électro-conductrice comprend en outre un polymère hydrosoluble, où le polymère hydrosoluble est un copolymère d'isobutylène - anhydride maléique contenant une unité structurelle (a) représentée par la formule générale suivante (I) 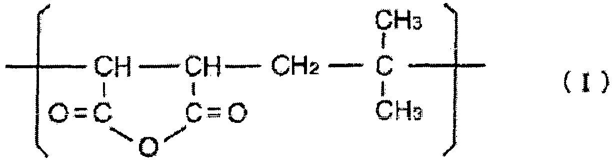 et est partiellement hydrolysée.

2. Composition adhésive électro-conductrice pour une électrode de dispositif électrochimique selon la revendication 1,
dans laquelle un poids moléculaire (Mw) du polymère hydrosoluble est de 30 000 à 300 000.

3. Composition adhésive électro-conductrice pour une électrode de dispositif électrochimique selon la revendication 1 ou 2,
dans laquelle le polymère hydrosoluble contient une unité structurelle (b) représentée par la formule générale suivante (II) 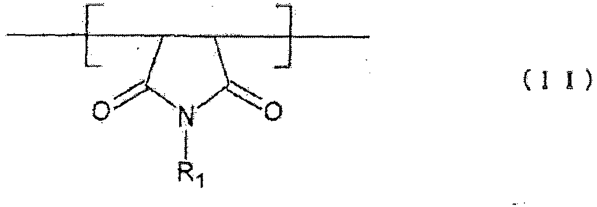 dans laquelle R₁ est au moins un groupe fonctionnel choisi dans le groupe consistant en un hydrogène, un groupe alkyle ayant 1 à 6 atomes de carbone, un groupe cycloalkyle ayant 3 à 12 atomes de carbone, un groupe phényle, et un groupe hydroxyphényle ; et/ou
une unité structurelle (c) représentée par la formule générale suivante (III)

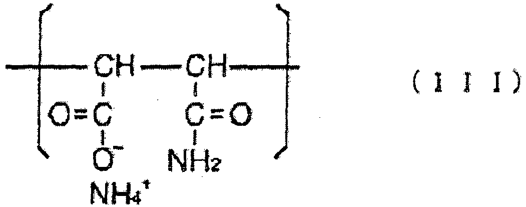

4. Composition adhésive électro-conductrice pour une électrode de dispositif électrochimique selon l'une quelconque des revendications 1 à 3,
dans laquelle un rapport de teneur de l'unité structurelle (a) sur l'unité structurelle (b) et l'unité structurelle (c) est de l'unité structurelle (a) / l'unité structurelle (b) et l'unité structurelle (c) = 25/75 à 75/25 en un rapport molaire, dans le polymère hydrosoluble.

5. Composition adhésive électro-conductrice pour une électrode de dispositif électrochimique selon l'une quelconque des revendications 1 à 4,
dans laquelle un rapport de teneur du carbone électro-conducteur est de 8 à 38 % en masse,
un rapport de teneur du polymère hydrosoluble est de 2 à 4 % en masse,
un rapport de teneur de l'agent liant particulaire est de 2 à 20 % en masse, et
un rapport de teneur du milieu de dispersion est de 60 à 90 % en masse.

6. Composition adhésive électro-conductrice pour une électrode de dispositif électrochimique selon l'une quelconque des revendications 1 à 5,
dans laquelle un pH de la composition adhésive électro-conductrice pour une électrode de dispositif électrochimique est de 6 à 10.

7. Collecteur de courant pourvu d'une couche adhésive, comprenant :
une couche adhésive électro-conductrice obtenue par application de la composition adhésive électro-conductrice pour une électrode de dispositif électrochimique selon l'une quelconque des revendications 1 à 6 sur un collecteur de courant et séchage de la composition adhésive électro-conductrice pour une électrode de dispositif électrochimique.

8. Collecteur de courant pourvu d'une couche adhésive selon la revendication 7, dans lequel une épaisseur de la couche adhésive électro-conductrice est de 0,5 à 5 µm.

9. Électrode pour un dispositif électrochimique, comprenant :
une couche de matériau actif d'électrode contenant un matériau actif d'électrode, sur la couche adhésive électro-conductrice du collecteur de courant pourvu d'une couche adhésive selon la revendication 7 ou 8.
